## Europäisches Patentamt

## European Patent Office

## Office européen des brevets

(11) Veröffentlichungsnummer: **0 094 338**
**B1**

(12) # EUROPÄISCHE PATENTSCHRIFT

(45) Veröffentlichungstag der Patentschrift:
07.01.88

(51) Int. Cl.⁴: **B 25 J 9/00**, B 25 J 15/02

(21) Anmeldenummer: **83710023.9**

(22) Anmeldetag: **30.04.83**

(54) **Roboteranlage.**

(30) Priorität: **11.05.82 SE 8202943**

(43) Veröffentlichungstag der Anmeldung:
**16.11.83 Patentblatt 83/46**

(45) Bekanntmachung des Hinweises auf die Patenterteilung:
**07.01.88 Patentblatt 88/1**

(84) Benannte Vertragsstaaten:
**AT BE CH DE FR GB IT LI NL**

(56) Entgegenhaltungen:
**EP - A - 0 043 208**
**GB - A - 1 461 432**
**GB - A - 2 060 584**

**IBM TECHNICAL DISCLOSURE BULLETIN, Band 23, Nr. 12, Mai 1981, Seiten 5366-5368, NEW YORK, (US) H.A. APPENZELLER et al.: "Turret head gripper assembly".**

(73) Patentinhaber: **ASEA AB, S-721 83 Västeras (SE)**

(72) Erfinder: **Berg, Rune, Bessemergatan 85, S-724 74 Västeras (SE)**
Erfinder: **Favot, Guido, Juravägen 6, S-722 31 Västeras (SE)**

(74) Vertreter: **Boecker, Joachim, Dr.-Ing., Rathenauplatz 2-8, D-6000 Frankfurt a.M. 1 (DE)**

## Beschreibung

Die Erfindung betrifft eine Roboteranlage gemäss dem Oberbegriff des Anspruches 1.

Bei der Montage mehrerer Werkstücke zu einem Produkt oder an einem Produkt in einer Montagestation mit Hilfe eines Roboters kann das Heranführen der Werkstücke durch den Roboter vom Magazin zu der Montagestation einen langen Weg erfordern, dessen Zurücklegung erhebliche Zeit beansprucht. Die für diese Transportbewegungen erforderliche Zeit kann für den Produktionstakt bestimmend sein. Dagegen ist für das zielgenaue Absetzen der Werkstücke auf den Montageträger bzw. ihr Einpassen in andere Werkstücke wenig Zeit erforderlich. Wenn ausserdem die meisten zu montierenden Werkstücke so unterschiedlich sind, dass für sie unterschiedliche Greifvorrichtungen erforderlich sind, so ist für jedes Werkstück ein Roboter oder ein Roboterarm erforderlich.

Aus der GB-A-1 461 432 ist ein Roboter zur Ausführung von Schweissarbeiten bekannt, bei welchem der äussere Arm des Roboters stets in vertikaler Richtung verläuft und um seine Längsachse drehbar ist. Der Arm kann ausserdem in der horizontalen Ebene längs zweier rechtwinkliger Koordinaten beliebig verschoben werden. Am unteren freien Ende dieses Roboterarms ist ein Werkzeugkopf (Revolverkopf) angeordnet, der mehrere auf einem horizontalen Kreis angeordnete Halter für Greifvorrichtungen hat, wobei jeder Halter individuell um eine horizontale Achse im Verhältnis zum zentralen Revolverkopfteil drehbar sind, während die eigentlichen Greifvorrichtungen um Längsachse drehbar sind.

Durch die doppelten Drehachsen der einzelnen Werkzeughalter in Bezug auf den zentralen Revolverkopfteil wird der gesamte Revolverkopf relativ gross, aufwendig und schwerfällig.

Aus der GB-A-2 060 584 ist es bekannt, in den Bearbeitungsstationen von Transportbandanlagen Roboter zur Montage von Teilen zu verwenden, wobei Transportbahnen und Magazine mit Zuführvorrichtungen von Werkstücken in den Arbeitsbereich des Roboters vorhanden sind.

Der Erfindung liegt die Aufgabe zugrunde, eine Roboteranlage der eingangs genannten Art zu entwickeln, bei der der für die Montagearbeit vorgesehene Roboter mit einem im Aufbau relativ einfachen und nicht sehr raumaufwendigen Revolverkopf versehen ist, mit dem er mehrere Werkstücke für ein Produkt in derselben Montagestation in schneller Reihenfolge und mit relativ geringen Bewegungsabläufen montieren kann.

Zur Lösung dieser Aufgabe wird eine Roboteranlage gemäss dem Oberbegriff des Anspruches 1 vorgeschlagen, die erfindungsgemäss die im kennzeichnenden Teil des Anspruches 1 genannten Merkmale hat.

Vorteilhafte Ausgestaltungen der Erfindung sind in den weiteren Ansprüchen genannt.

Die Greifvorrichtungen können dabei mit individuellen Greifeinheiten ausgerüstet sein, die den jeweils zu ergreifenden Werkstücken angepasst sind. Um die Montagestation sind mehrere Transportbahnen oder Magazine mit Zuführvorrichtungen zum Vorschub von Werkstücken in den Arbeitsbereich des Roboters vorgesehen. Der Revolverkopf ist an dem Handgelenk des Roboters an dem äussersten Roboterarm auf solche Weise befestigt, dass seine Rotationsachse eine Winkel mit der der äussersten Rotationsachse des Handgelenks bildet, welcher Winkel vorzugsweise 45 Grad beträgt.

Die Greifvorrichtungen sind vorzugsweise symmetrisch aufgebaut und derart auf dem Revolverkopf plaziert, dass in jeder Position des Revolverkopfes die Rotationsachse des Handgelenks mit der Symmetrieachse oder der Symmetrieebene jeweils einer Greifvorrichtung zusammenfällt. Dies erleichtert die Montage, da beim Montieren nur kleine Hebebewegungen und horizontale Transportbewegungen erforderlich sind. Die Anzahl der Greifvorrichtungen auf dem Revolverkopf kann variieren, meistens sind drei, vier oder sechs Greifvorrichtungen vorhanden. Die Magazine können verschiedener Art sein. Das Magazin für asymmetrische Arbeitsstücke enthält vorzugsweise Paletten mit Positioniergliedern zur Fixierung der Werkstücke in einem bestimmten Muster, das so orientiert ist, dass die Werkstücke von den Greifvorrichtungen erfasst werden können. Die Roboteranlage kann einen oder mehrere Roboter enthalten und kann mit anderen Montagegeräten, wie zum Beispiel Maschinen zum Einsetzen und Anziehen von Schrauben, versehen sein.

Anhand der Figuren soll die Erfindung näher erläutert werden. Es zeigen

Fig. 1 in perspektivischer Darstellung ein Ausführungsbeispiel einer Roboteranlage gemäss der Erfindung,

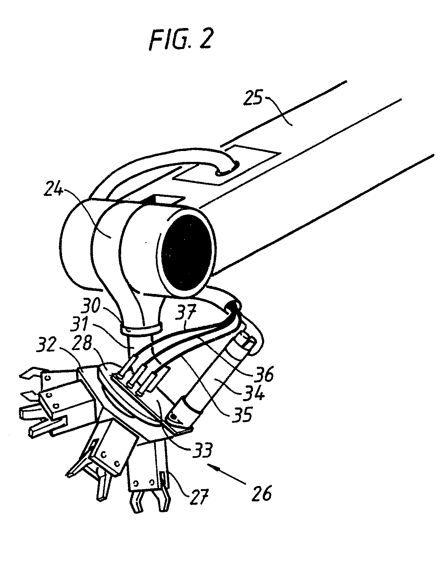

Fig. 2 im grösseren Massstab den äusseren Teil eines Roboterarms mit einem Revolverkopf für eine Roboteranlage gemäss der Erfindung.

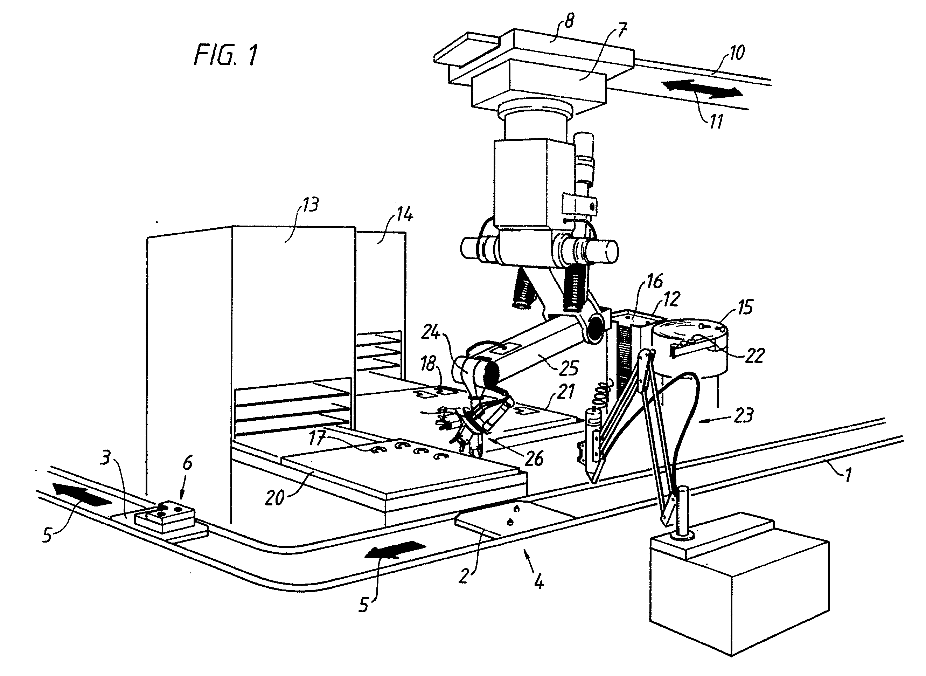

In Figur 1 bezeichnet 1 eine Montagebahn zur schrittweisen Verschiebung von Montageträgern 2, 3 in die bzw. aus der betrachteten Montagestation 4, in der sich ein leerer Montageträger 2 befindet. Die plattenförmigen Montageträger 2, 3 wandern in Richtung der Pfeile 5. Der Montageträger 3, der sich auf dem Wege weg von der Montagestation 4 befindet, trägt ein montiertes Produkt 6. Ein Roboter 7 ist in einem Schlitten 8 aufgehängt, der auf einer Führungsbahn 10 verschiebbar ist, wie es durch die Pfeile 11 angedeutet ist. Hierdurch erhält der Roboter 7 einen grossen Arbeitsbereich. In der Montagestation 4 befinden sich Magazine 12, 13, 14 und 15 für die Werkstücke, aus denen die Produkte 6 zusammengebaut werden sollen. Das Magazin 12 enthält einen Stapel Grundplatten 16, und die Magazine 13 und 14 enthalten Werkstücke 17 bzw. Deckplatten 18, die in einem vorbestimmten Muster auf zu den Magazinen 13 bzw. 14 gehörenden Kassetten 20 bzw. 21 plaziert und fixiert sind. Bei dem Magazin 15 handelt es sich um einen Vibrationsausgeber für Scheiben oder Schrauben 22 oder ähnliche Teile. Vor der Montagestation ist ein Schraubenzieher 23 angeordnet.

Das Handgelenk 24 am äusseren Armteil 25 des Roboters 7 trägt einen Revolverkopf 26 mit sechs Greifvorrichtungen 27, die zum Greifen der Werkstücke 16, 17, 18 und 22 dienen. Der Revolverkopf 26 enthält eine Scheibe 28, die mittels einer Stange 31 am Flansch 30 des Handgelenks 24 befestigt ist. An der Scheibe 28 ist eine zweite Scheibe 32 drehbar angeordnet. Diese Scheibe 32 trägt die Greifvorrichtungen 27. Die Rotationsachse des Revolverkopfes bildet einen Winkel von 45° mit der Rotationsachse des Handgelenks 24. Der Revolverkopf 26 ist so ausgebildet und angeordnet, dass die Symmetrieachse der symmetrisch aufgebauten Greifvorrichtungen 27 in einer Position des Revolverkopfes mit der Rotationsachse des Handgelenks 24 zusammenfällt. Auf der Scheibe 28 ist eine Befestigungsanordnung 33 angebracht für eine Antriebsvorrichtung 34 zur Drehung des Revolverkopfes sowie Anschlüsse für Bedienungsleitungen 35, 36 und 37, beispielsweise für Druckluft, zur Betätigung der Greifvorrichtungen 27 und zur Fixierung des Revolverkopfes 26 in seinen verschiedenen Positionen. Die Scheiben 28 und 32 sind mit Kanälen zur Leitung des Treibmittels für die Betätigung der Greifvorrichtungen versehen.

Während der Zeit, in der ein Montageträger 3 mit einem fertigmontierten Produkt 6 von der Montagestation 4 wegtransportiert und durch einen neuen leeren Montageträger 2 ersetzt wird, holt der Roboter 7 eine Grundplatte 16 vom Magazin 12, zwei Werkstücke 17 von der Palette 20 des Magazins 13, eine Deckplatte 18 von der Palette 21 des Magazins 14 und zwei Unterlegscheiben 22 o.dgl. vom Magazin 15. Der Revolverkopf 26 mit den Werkstücken wird zur Montagestation gefahren, wo die Werkstücke montiert werden. Die Werkstücke können in schneller Folge auf dem Montageträger abgesetzt werden, da der Roboter bei der Montage nur kleine Bewegungen auszuführen braucht. Da der Revolverkopf 26 in seinen Greifvorrichtungen 27 mehrere Werkstücke gleichzeitig bereithält, braucht der Revolverkopf 26 für die Montage jedes weiteren Werkstückes nur um eine kleine Strecke angehoben und eventuell auch nur um eine kleine Strecke versetzt zu werden. Durch Drehung des Revolverkopfes um seine eigene Drehachse in eine neue Rastposition wird ja ein neues Werkstück in eine geeignete Montagestellung vorgeschoben. Bei einer Ausführung, bei welcher die Symmetrielinie oder die Symmetrieebene einer Greifvorrichtung mit der Rotationsachse des Handgelenks zusammenfällt, braucht in gewissen Fällen der Revolverkopf nur zu seiner Drehung in eine neue Rastposition angehoben und danach zur Montage des nächsten Werkstücks gesenkt zu werden. Die Bewegungen werden unerheblich und die in den Greifvorrichtungen des Revolverkopfes befindlichen Werkstücke können in schneller Folge montiert werden. Nachdem die Arbeitsstücke des Roboters 7 auf dem Montageträger plaziert worden sind, können Schrauben mit dem automatischen Schraubenzieher 23 in das zusammengesetzte Produkt in der Montagestation 4 eingesetzt und angezogen werden.

## Patentansprüche

1. Roboteranlage zum Montieren mehrerer, vorzugsweise unterschiedlicher Werkstücke an oder zu einem Produkt mit einer Montagestation (4) und mindestens einem Roboter (7), der einen um eine eigene Drehachse drehbaren und in einer Anzahl von Positionen fixierbaren Revolverkopf (26) mit mehreren individuell betätigbaren und den jeweiligen Werkstücken angepassten Greifvorrichtungen (27) trägt, dadurch gekennzeichnet, dass die Rotationsachse des Revolverkopfes (26) einen Winkel mit der äussersten Drehachse des Roboters (7) bildet und dass Transportbahnen oder Magazine (12, 13, 14, 15) mit Zuführvorrichtungen zum Vorschub von Werkstücken (16, 17, 18, 22) in den Arbeitsbereich des Roboters (7) vorhanden sind.

2. Roboteranlage nach Anspruch 1, dadurch gekennzeichnet, dass der Winkel zwischen der Rotationsachse des Revolverkopfes (26) und der äussersten Drehachse des Roboters (7) 45° beträgt.

3. Roboteranlage nach einem der vorhergehenden Ansprüche, dadurch gekennzeichnet, dass die Symmetrieachse einer Greifvorrichtung (27) in einer Position mit der äussersten Drehachse des Roboters (7) zusammenfällt oder zu dieser Drehachse parallel verläuft.

4. Roboteranlage nach einem der vorhergehenden Ansprüche, dadurch gekennzeichnet, dass der Revolverkopf (26) mindestens drei, vorzugsweise vier oder sechs Greifvorrichtungen (27) trägt.

5. Roboteranlage nach einem der vorhergehenden Ansprüche, dadurch gekennzeichnet, dass mindestens ein Magazin (13, 14) mehrere Paletten (20, 21) mit Hilfsmitteln zur Fixierung von Werkstücken (17, 18) in bestimmten Positionen auf den Paletten (20, 21) enthält.

## Claims

1. Robot installation for attaching a plurality of preferably different work pieces to a product or for assembling these work pieces to form a product comprising an assembly station (4) with at least one robot (7) supporting a turret (26) which can be rotated about one of its axes and positiones in a plurality of positions, the turret being equipped with a plurality of individually operable gripping means (27) which are adjusted to the corresponding work piece, characterized in that the axis of rotation of the turret (26) makes an angle with the outermost axis of rotation of the robot (7) and that there are conveying tracks or magazines (12, 13, 14, 15) with feeding means for advancing work pieces (16, 18, 19, 22) into the operating range of the robot (7).

2. Robot installation according to Claim 1, characterized in that the angle between the axis of rotation of the turret (26) and the outermost axis of rotation of the robot (7) is 45°.

3. Robot installation according to any of the preceding Claims, characterized in that in one position the axis of symmetry of a gripping means (27) either coincides with or extends parallel to the outermost axis of rotation of the robot (7).

4. Robot installation according to any of the preceding Claims, characterized in that the turret (26) is provided with at least three, preferably four or six gripping means (27).

5. Robot installation according to any of the preceding Claims, characterized in that at least one magazine (13, 14) comprises a plurality of pallets (20, 21) provided with auxiliary means for fixing work pieces (17, 18) in specified positions on the pallets (20, 21).

**Revendications**

1. Installation à robot pour le montage de plusieurs pièces à travailler, de préférence plusieurs pièces différentes appartenant à un produit ou à assembler en un produit, du type comportant un poste de montage (4) et au moins un robot (7) qui porte une tête revolver (26) qui est susceptible de tourner autour d'un axe de rotation qui lui est propre et d'être immobilisé dans un certain nombre de positions, ladite tête revolver portant plusieurs dispositifs de préhension (27) qui sont susceptibles d'être commandés individuellement et qui sont adaptés respectivement aux pièces à travailler, caractérisée par le fait que l'axe de rotation de la tête revolver (26) forme un angle avec l'axe de rotation le plus extérieur du robot (7), et que sont prévues des voies de transport ou des magasins (12, 13, 14, 15) avec des dispositifs d'amenée pour faire avancer les pièces à travailler (16, 17, 18, 22) dans la zone de travail du robot (7).

2. Installation à robot selon la revendication 1, caractérisée par le fait que l'angle entre l'axe de rotation de la tête revolver (26) et l'axe de rotation le plus extérieur du robot (7) est de 45°.

3. Installation à robot selon l'une des revendications précédentes, caractérisée par le fait que l'axe de symétrie d'un dispositif de préhension (27) coïncide, dans une position, avec l'axe de rotation le plus extérieur du robot (7) ou s'étend parallèlement à cet axe de rotation.

4. Installation à robot selon l'une des revendications précédentes, caractérisée par le fait que la tête revolver (26) porte au moins trois, de préférence quatre ou six dispositifs de préhension (27).

5. Installation à robot selon l'une des revendications précédentes, caractérisée par le fait qu'au moins un magasin (13, 14) comporte plusieurs palettes (20, 21) avec des moyens auxiliaires pour fixer des pièces à travailler (17, 18) dans des positions déterminées sur les palettes (20, 21).

FIG. 1

0 094 338

FIG. 2

7